Europäisches Patentamt

European Patent Office

Office européen des brevets

(11) Veröffentlichungsnummer: **0 265 794 B1**

## (12) EUROPÄISCHE PATENTSCHRIFT

(45) Veröffentlichungstag der Patentschrift: **29.04.92**

(21) Anmeldenummer: **87115151.0**

(22) Anmeldetag: **16.10.87**

(51) Int. Cl.⁵: **B01D 25/12**

### (54) Verfahren zur Regelung des Filterplatten-Anlagedruckes bei Filterpressen und Vorrichtung zur Durchführung des Verfahrens.

(30) Priorität: **29.10.86 DE 3636799**

(43) Veröffentlichungstag der Anmeldung:
**04.05.88 Patentblatt 88/18**

(45) Bekanntmachung des Hinweises auf die
Patenterteilung:
**29.04.92 Patentblatt 92/18**

(84) Benannte Vertragsstaaten:
**AT BE CH DE ES FR GB IT LI SE**

(56) Entgegenhaltungen:
**WO-A-79/00012         DE-A- 2 306 169**
**DE-A- 2 750 028      DE-A- 2 814 988**
**DE-A- 2 820 788      FR-A- 1 519 285**
**FR-A- 2 265 435      GB-A- 2 023 018**

**ELECTRONIC ENGINEERING, Band 36, Nr.441,**
**November 1964, Seiten 736-739, C.I. SACH:"A**
**multi-Channel tree strain recording system"**

(73) Patentinhaber: **Rittershaus & Blecher GmbH**
**Wittensteinstrasse 80-100**
**W-5600 Wuppertal 2(DE)**

(72) Erfinder: **Oelbermann, Max**
**Moltkestrasse 19**
**W-5630 Remscheid(DE)**

(74) Vertreter: **Peerbooms, Rudolf, Dipl.-Phys.**
**Postfach 200 208 Dickmannstrasse 45c**
**W-5600 Wuppertal 2(DE)**

## Beschreibung

Die Erfindung betrifft ein Verfahren zur Regelung des aus Schließdruck und Filterinnendruck resultierenden Filterplatten-Anlagedruckes bei einer, eine hydraulische Schließzylindereinrichtung aufweisenden Plattenfilterpresse und eine Vorrichtung zur Durchführung des Verfahrens.

Bei Filterpressen sind die Filterplatten, - und im Falle von Rahmenfilterpressen die zwischen zwei Filterplatten jeweils angeordneten Rahmen -, auf horizontalen oder vertikalen Führungen verschieb- oder verfahrbar gelagert. Zur Einleitung eines Filtrationsprozesses werden die Filterplatten mittels einer hydraulischen Schließzylindereinrichtung zu einem geschlossenen Filterplattenpaket zusammengeschoben, wobei ein solcher Schließdruck ausgeübt werden muß, daß die zwischen den Filterplatten liegenden Filterkammern randseitig zuverlässig abgedichtet sind. Bei der Filtration übt die unter einem oft hohen Druck in die Filterkammern zugeführte Trübe eine auf ein Auseinanderspreizen des Filterplattenpaketes gerichteten Spreizdruck aus, der durch eine entsprechende Erhöhung des Schließdruckes kompensiert werden muß. In gleicher Weise muß auch bei Membranfilterpressen der Druck des Preßmediums oder bei Filterpressen, bei denen ein Auswaschen des Filterkuchens erfolgt, der Druck des Waschwassers durch Erhöhen des Schließdruckes kompensiert werden. Während des Filtrationsprozesses, des Filterkuchenpreßvorganges und des Filterkuchenwaschvorganges wird folglich ein so hoher Schließdruck auf das Filterplattenpaket ausgeübt, daß dieser bei Wegfall des Trübe-, Preßmedium- oder Waschwasserdruckes einen solchen Filterplatten-Anlagedruck bewirken würde, daß die Filterplatten oder die ggfs. dazwischen angeordneten Filterrahmen, Filtertücher oder Preßmembranen zerstört würden.

Aus der WO-A-79/00012 ist bekannt, zur Vermeidung dieser Gefahr den Schließdruck der hydraulischen Schließzylindereinrichtung in Abhängigkeit von dem jeweils im Filterplattenpaket herrschenden Innendruck zu regeln. Zu diesem Zweck werden einerseits der Hydraulikdruck der Schließzylindereinrichtung und andererseits die Drücke der Trübe, des Preßmediums und des Waschwassers gemessen, in einem Differenzgeber jeweils die Druckdifferenz zwischen hydraulischem Schließdruck und dem jeweils ausgeübten Trübe-, Preßmedium- oder Waschwasserdruck ermittelt und es wird der Schließdruck auf Einhaltung einer bestimmten Soll-Druckdifferenz geregelt. Diese bekannte Regelungsart erfordert aber einen erheblichen konstruktiven Aufwand, da sie mehrere Druckmeßvorrichtungen, eine Auswahlvorrichtung hinsichtlich des jeweils zu kompensierenden Innendruckes, d.h. von Trübe, Preßmedium oder Waschwasser, und einen Differenzdruckgeber erfordert. Darüber hinaus steht der dort als Regelgröße verwendete Differenzdruck nur in einem mittelbaren Zusammenhang mit dem tatsächlichen Anlagedruck der Filterplatten, weshalb diese Regelungsart ungenau ist.

Aus der FR-A-2 265 435 ist ein Regelungsverfahren bekannt, bei dem ein mechanischer Sensor die durch den Schließdruck bewirkte Längenänderung des Filterplattenpaketes erfaßt und einen Istwert liefert, der mit einer Sollwertstellung des Filterplattenpaketes verglichen und als Regelgröße verwendet wird. Die dort vom Sensor festgestellte Längenänderung beruht im wesentlichen auf der Verformung der an den Filterplatten umlaufenden Dichträndern und der dazwischen liegenden Filtertücher, deren Komprimierbarkeit aber stark vom Verschmutzungsgrad und Alterungseffekten abhängt. Dieser Sensor muß folglich häufig nachjustiert werden. Darüber hinaus ist auch der Sollwert nach vorgegebenem Prüfschließdruck öfters neu zu bestimmen, um diesen der Alterung und dem Verschleiß der Dichtränder und Filtertücher anzupassen.

Bei Formpressen zur Herstellung von Preßlingen aus z.B. metallischem Pulver (FR-A-1 519 285) ist es bekannt, den Preßdruck mittels Dehnungsmeßstreifen zu erfassen, die an Druckübertragungsstücken angebracht sind, welche jeweils zwischen zusammenwirkenden Preßplatten angeordnet sind. Bei solchen Formpressen hängt der Innendruck in den Preßkammern ausschließlich vom aufgebrachten Preßdruck ab. Bei Filterpressen wird dagegen der Innendruck durch verschiedene zusätzliche Druckquellen, z.B. durch die Trübezufuhr, geliefert, weshalb die Druckregelungen bei Form- und Filterpressen nicht miteinander vergleichbar sind.

Der Erfindung liegt die Aufgabe zugrunde, ein Verfahren zur Regelung des Filterplatten-Anlagedruckes anzugeben, das nur einen geringen konstruktiven Aufwand verlangt und sich durch hohe Genauigkeit auszeichnet. Ferner soll noch eine Vorrichtung zur Durchführung des Verfahrens angegeben werden.

Zur Lösung dieser Aufgabe ist erfindungsgemäß vorgesehen, daß als Regelgröße die im Anlagebereich herrschende Kompression mindestens einer Filterplatte, oder eines Rahmens (bei einer Rahmenfilterpresse) oder einer gesonderten, dem Kompressionsdruck des Filterplattenpaketes ausgesetzten Verformungsplatte verwendet und mittels Dehnungsmeßstreifen ermittelt wird und daß der Hydraulikdruck der Schließzylindereinrichtung auf Einhaltung eines Kompressions-Sollwertes gesteuert wird.

Die Kompression eines dem Kompressionsdruck ausgesetzten Teiles steht in unmittelbarem Zusammenhang mit dem auf die filterplatten ausgeübten Anlagedruck, so daß bei der Verwendung einer solchen Regelgröße eine sehr genaue Überwachung ermöglicht wird. Die Kompression kann mittels nur einer einzigen Sensoreinrichtung unabhängig davon, ob der Schließdruck gegen den Druck von Trübe, Preßmedium oder Waschwasser wirkt, ermittelt werden, wodurch der konstruktive Aufwand bei diesem Regelungsverfahren sehr gering gehalten werden kann. Mittels der Dehnungsmeßstreifen können auch kleinste Kompressionswege genau und reproduzierbar erfaßt werden.

Zur Durchführung des Verfahrens ist eine Vorrichtung vorgesehen, bei der die Dehnungsmeßstreifen im Bereich der äußeren Schmalseiten mindestens einer der Filterplatten oder eines Rahmens oder der Verformungsplatte angeordnet sind, bei der die elektrischen Ausgangssignale der Dehnungsmeßstreifen unmittelbar oder über einen Meßwertumformer an einen Regler geführt werden und bei der abhängig von den Stellsignalen des Reglers der Hydraulikdruck der Schließzylindereinrichtung gesteuert wird. Die Dehnungsmeßstreifen können dabei unmittelbar an der Schmalseite der Filterplatte, des Rahmens oder der Verformungsplatte angebracht, z.B. angeklebt sein. Diese konstruktiv besonders einfache Ausführungsart empfiehlt sich insbesondere dann, wenn die Filterplatte bzw. der Rahmen oder die Verformungsplatte aus einem verhältnismäßig stark kompressiblen Material, z.B. aus einem elastisch kompressiblen Kunststoff, besteht. Gemäß einer bevorzugten Ausführungsart können jedoch der Erfindung zufolge an den Schmalseiten der Filterplatte oder des Rahmens oder der Verformungsplatte ein oder mehrere, bei einer Kompression der Filterplatte bzw. des Rahmens oder der Verformungsplatte sich verformende Meßkörper angeordnet sein und können die Dehnungsmeßstreifen an den Verformungszonen der Meßkörper angebracht sein. Solche Meßkörper erfahren bei einer geeigneten Ausbildung eine stärkere Verformung als die sie tragenden Filterplatte oder dgl., so daß hierdurch die Meßempfindlichkeit beträchtlich gesteigert werden kann. Eine Steigerung der Meßempfindlichkeit um bis zu zwei Zehnerpotenzen kann dadurch erreicht werden, daß gemäß einer Weiterbildung der Erfindung der Meßkörper aus einem etwa U- oder bogenförmigen Körper, z.B. aus Stahl, besteht, dessen Rücken senkrecht zur Filterplatten-Hauptebene gerichtet ist und dessen beiden Fußenden an der Schmalseite der Filterplatte oder dgl. starr befestigt sind. Der Rücken des Meßkörpers erfährt bei einer Kompression der ihn tragenden Filterplatte eine Durchbiegung, wobei an seiner dem Filterplattenpaket abgewandten Seite eine Streckungs-Verformungszone und an seiner dem Filterplattenpaket zugewandten Seite eine Stauchungsverformungszone vorliegt. Der Erfindung zufolge werden die Dehnungsmeßstreifen bevorzugt sowohl an dieser Streckungs-Verformungszone als auch an dieser Stauchungs-Verformungszone angebracht.

Die Dehnungsmeßstreifen werden dabei so angeordnet und ihre zugeordnete Auswertschaltung so ausgelegt, daß eine Temperatur-Kompensation gegeben ist. Die für eine solche Temperatur-Kompensation vorzunehmenden Maßnahmen sind bei Dehnungsmeßstreifen aufweisenden Meßeinrichtungen an sich bekannt, so daß sich ein näheres Eingehen hierauf erübrigt.

Die Erfindung wird im folgenden anhand mehrerer in der Zeichnung dargestellter Ausführungsbeispiele näher erläutert. In der Zeichnung zeigen:

Fig. 1 eine Plattenfilterpresse mit einer ersten Ausführungsart zur Regelung des Filterplatten-Anlagedruckes,

Fig. 2 eine Filterplattenpresse mit einer zweiten Ausführungsart zur Regelung des Filterplatten-Anlagedruckes,

Fig. 3 in vergrößerter Darstellung einen der in Fig. 2 gezeigten Meßkörper,

Fig. 4 eine Draufsicht auf den Meßkörper, in Richtung des Pfeiles IV in Fig. 3 gesehen,

Fig. 5 eine Draufsicht auf den Meßköroer, in Richtung des Pfeiles V in Fig. 3 gesehen, und

Fig. 6 eine Rahmenfilterpresse mit einer dritten Ausführungsart zur Regelung des Filterplatten-Rahmen-Anlagedruckes.

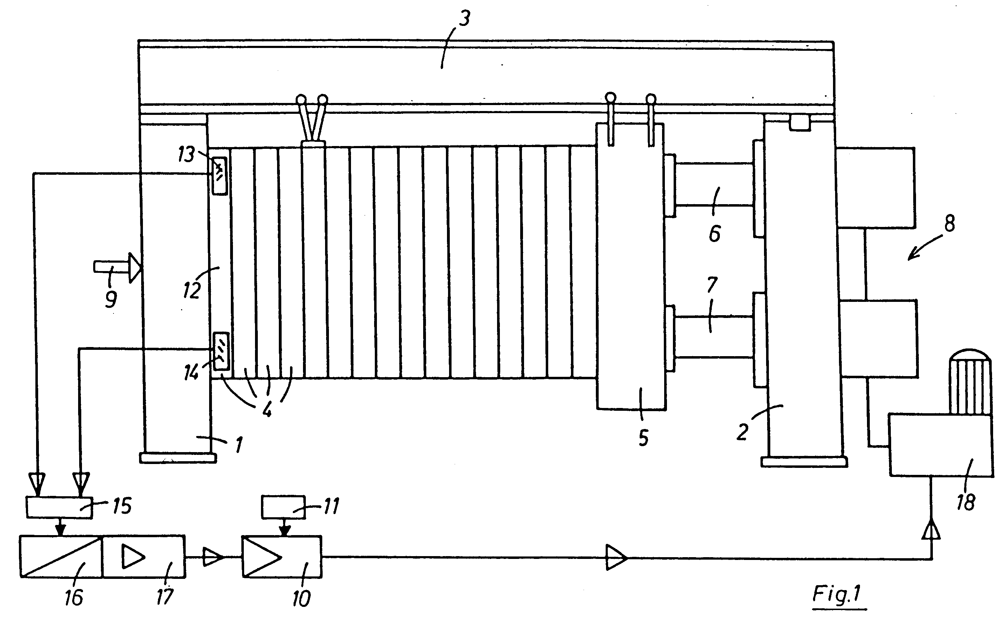

Fig. 1 zeigt schematisch eine Filterplattenpresse mit einem oder zwei auf Ständern 1, 2 befestigten I-Führungsträgern 3, an denen ein Paket von Filterplatten 4 verfahrbar aufgehängt sind. Die Filterplatten 4 sind zwischen dem zugleich als Endplatte wirkenden Ständer 1 und einer ebenfalls auf den Führungsträgern 3 verfahrbaren Kopfplatte 5 eingefaßt und können mittels einer, mehrere Schließzylinder 6, 7 umfassenden, hydraulischen Schließzylinder-Einrichtung 8 zu einem geschlossenen Paket zusammengefahren werden. Mit einem Pfeil 9 ist die im Bereich der Endplatte 1 erfolgende Zufuhr von Trübe, Preßmedium und Waschwasser angedeutet.

Zur Regelung des Filterplatten-Anlagedruckes bei geschlossenem Filterplattenpaket ist ein Regelkreis mit einem Regler 10 vorgesehen, dem von einem Sollwertgeber 11 eine dem Sollwert der Regelgröße entsprechende Größe zugeführt wird. Als Regelgröße ist hier die Kompression der der Endplatte 1 benachbarten Filterplatte 4 verwendet, welche über unmittelbar an die Schmalseiten 12 der Filterplatte angebrachte Dehnungsmeßstreifen 13, 14 erfaßt wird. Beim Ausführungsbeispiel sind die Dehnungsmeßstreifen 13, 14 jeweils an der oberen und an der unteren Ecke der Filterplatte, und zwar an deren vorderer, in Fig. 1 gezeigten Seite und an der in Fig. 1 nicht sichtbaren Rückseite der Filterplatte angeordnet. Die elektrischen Ausgangssignale der Dehnungsmeßstreifen 13, 14 werden in einer Auswertschaltung 15 unter Temperaturkompensation zusammengefaßt und über einen Meßumformer 16 und einen Verstärker 17 an den Regler 10 als Istwert der Regelgröße geliefert. Der Regler 10 liefert je nach Regelabweichung einen Stellbefehl an eine Hydraulikpumpe 18, die den Hydraulikdruck für die Schließzylindereinrichtung 8 entsprechend vergrößert oder absenkt, so daß eine evtl. Regelabweichung aufgehoben wird und also innerhalb des Filterplattenpaketes ein konstanter Filterplatten-Anlagedruck unabhängig von dem im Filterplattenpaket herrschenden Innendruck aufrechterhalten wird.

Beim Ausführungsbeispiel nach Fig. 1 kann alternativ zu der die Dehnungsmeßstreifen 13, 14 tragenden, auf den Führungsträgern 3 verfahrbaren Filterplatte eine gesonderte, elastisch kompressible Verformungsplatte angeordnet werden, die starr an der Endplatte 1 angebracht ist.

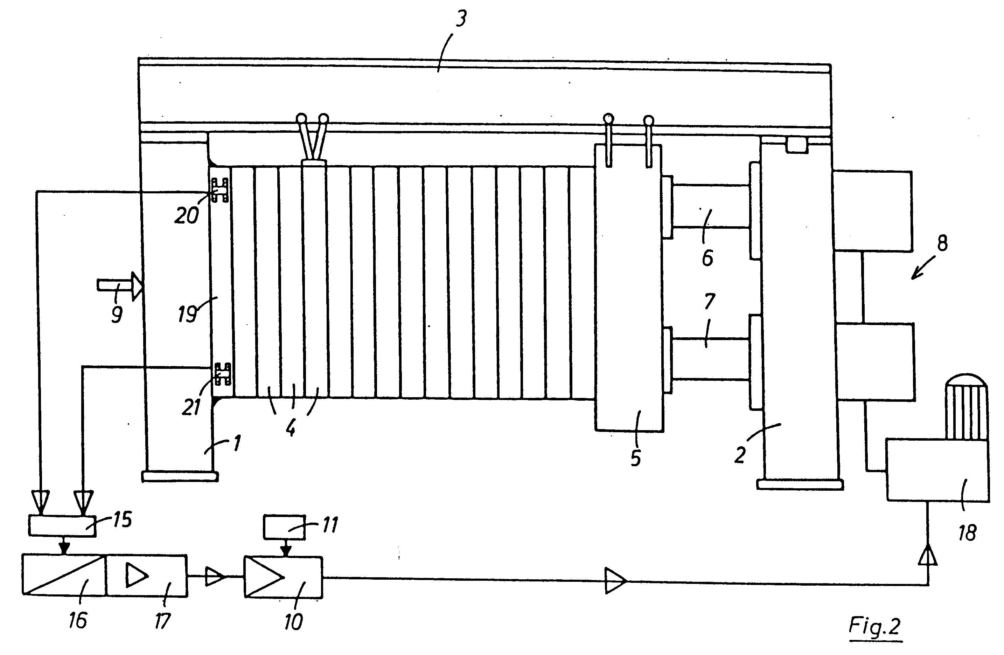

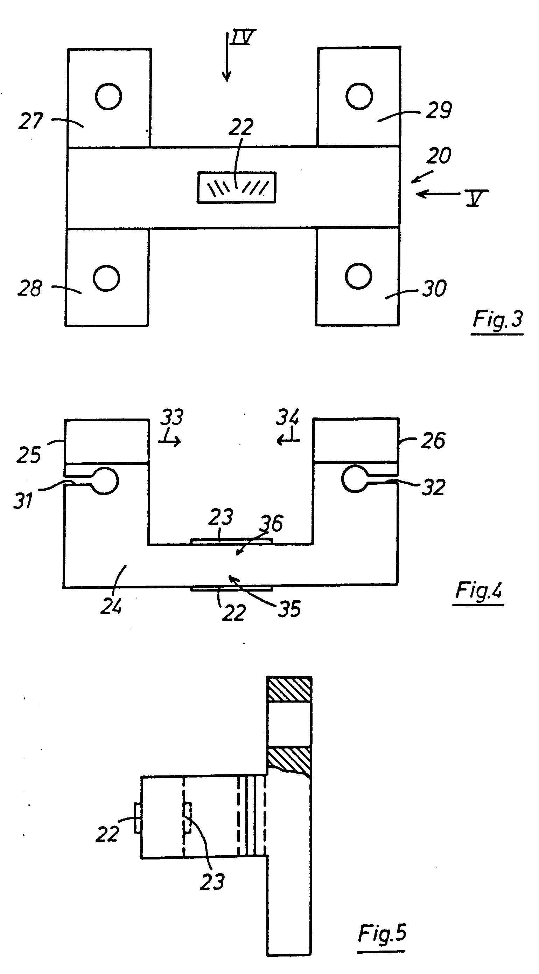

Eine solche Verformungsplatte 19 ist beim Ausführungsbeispiel nach den Fig. 2 bis 5 an der Endplatte 1 angebracht. Hier sind an den Schmalseiten, und zwar wiederum an den vier Ecken, besondere Meßkörper 20, 21 angebracht, an deren Verformungszonen die Dehnungsmeßstreifen 22, 23 angeordnet sind. Die Meßkörper 20 sind U-förmig ausgebildet und sind mit ihrem U-Rücken 24 senkrecht zu den Filterplattenhauptebenen, d. h. parallel zum Kompressionsdruck, gerichtet. Die Seitenschenkel des U-förmigen Meßkörpers 20 sind an ihren Fußenden 25, 26 mit Anschraubflanschen 27, 28, 29, 30 versehen, die quer zur Längserstreckung des Rückens 24 abragen. Ferner sind die Seitenschenkel kurz oberhalb ihrer Fußenden mit Schwächungsschlitzen 31, 32 versehen. Bei einer Kompression der Verformungsplatte 19 werden die Fußenden 25, 26 aufeinander zu bewegt, wie durch die Pfeile 33, 34 in Fig. 4 angedeutet ist. Hierdurch erfährt der Rücken 34 eine Ausbiegung, wobei an der dem Filterplattenpaket abgewandten Seite des Rückens eine Streckungs-Verformungszone 35 und an der dem Filterplattenpaket zugewandten Seite des Rückens eine Stauchungs-Verformungszone 36 auftritt. Wie insbesondere aus Fig. 4 ersichtlich ist, sind bei jedem Meßkörper an beiden Verformungszonen 35, 36 jeweils Dehnungsmeßstreifen 23, 24 angebracht. Die Meßkörper 20, 21 erlauben eine sehr empfindliche Messung der Verformung der Verformungsplatte 19, und die an ihnen vorgesehenen Dehnungsmeßstreifen 22, 23 liefern wiederum ein Ausgangssignal, das dem Anlagedruck exakt entspricht, mit dem die letzte Filterplatte 4 an der Verformungsplatte 19 anliegt. Im übrigen entspricht der Aufbau des Regelkreises in Fig. 2 dem Ausführungsbeispiel nach Fig. 1. Auch beim Ausführungsbeispiel nach Fig. 2 könnte alternativ zu einer gesonderten Verformungsplatte 19 eine verfahrbare Filterplatte 4 vorgesehen werden, an der die Meßkörper 20, 21 angebracht sind.

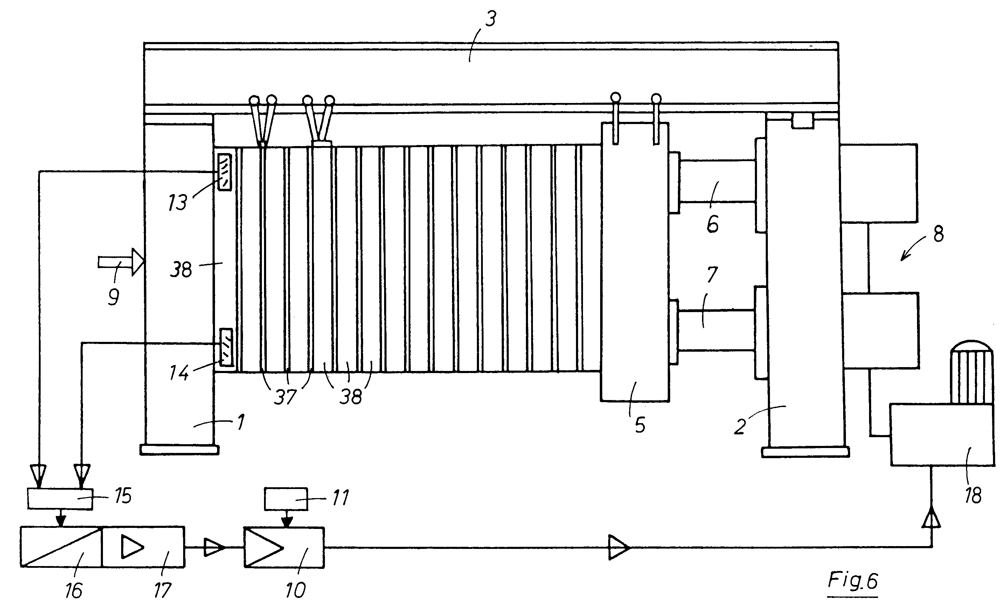

Fig. 6 zeigt eine Rahmenfilterpresse, bei welcher zwischen den flachen Filterplatten 37 jeweils ebenfalls auf den oberen Führungsträgern 3 verfahrbare Rahmen 38 zwischengeschaltet sind, welche die Filterkammern umschließen. An dem Rahmen 38 sind Dehnungsmeßstreifen 13, 14 als Sensoren eingesetzt, die in zweckmäßiger Weise an den Schmalseiten der Rahmen 38 unmittelbar - analog dem Ausführungsbeispiel nach Fig. 1 - oder unter Zwischenschaltung der Meßkörper 20, 21 gemäß dem Ausführungsbeispiel nach Fig. 2 angeordnet werden können.

Bei allen vorgenannten Ausführungsbeispielen wir die Regelgröße abhängig von einem Kompressionsweg gewonnen.

## Patentansprüche

1. Verfahren zur Regelung des aus Schließdruck und Filterinnendruck resultierenden Filterplatten-Anlagedruckes bei einer, eine hydraulische Schließzylindereinrichtung (8) aufweisenden Plattenfilterpresse, dadurch gekennzeichnet, daß als Regelgröße die im Anlagebereich herrschende Kompression mindestens einer Filterplatte (4) oder eines Rahmens (38) oder einer gesonderten, dem Kompressionsdruck des Filterplattenpaketes ausgesetzten Verformungsplatte (19) verwendet und mittels Dehnungsmeßstreifen (13, 14, 22, 23) ermittelt wird und daß der Hydraulikdruck der Schließzylindereinrichtung (8) auf Einhaltung eines Kompressions-Sollwertes gesteuert wird.

2. Vorrichtung zur Durchführung des Verfahrens nach Anspruch 1, dadurch gekennzeichnet, daß die Dehnungsmeßstreifen (13, 14) im Bereich der äußeren Schmalseiten (12) mindestens einer der Filterplatten (4) oder eines Rahmens (38) oder der Verformungsplatte (19) angeordnet sind und daß deren elektrische Ausgangssignale unmittelbar oder über einen Meßwertumformer (16) an einen Regler (10) geführt werden, abhängig von dessen Stellsignalen der Hydraulikdruck der Schließzylindereinrichtung (8) gesteuert wird.

3. Vorrichtung nach Anspruch 2, dadurch gekennzeichnet, daß die Dehnungsmeßstreifen (13, 14) unmittelbar an der Filterplatte (4), dem Rahmen (38) oder der Verformungsplatte (19) angeklebt sind.

4. Vorrichtung nach Anspruch 2, dadurch gekennzeichnet, daß an den Schmalseiten (12) der Filterplatte (4) oder des Rahmens (38) oder der Verformungsplatte (19), ein oder mehrere bei einer Kompression der Filterplatte bzw. des Rahmens oder der Verformungsplatte sich verformende Meßkörper (20, 21) angeordnet sind und daß die Dehnungsmeßstreifen (22, 23) an den Verformungszonen (35, 36) des Meßkörpers angebracht sind.

5. Vorrichtung nach Anspruch 4, dadurch gekennzeichnet, daß der Meßkörper (20, 21) aus einem etwa U- oder bogenförmigen Körper, z. B. aus Stahl, besteht, dessen Rücken (24) senkrecht zu den Filterplatten-Hauptebenen gerichtet ist und dessen beiden Fußenden (25, 26) an den Schmalseiten (12) der Filterplatte (4) des Rahmens (38) oder der Verformungsplatte (19) starr befestigt sind.

6. Vorrichtung nach Anspruch 5, dadurch gekennzeichnet, daß der Rücken (24) des Meßkörpers (20, 21) sowohl an der dem Filterplattenpaket abgewandten Seite als auch an der dem Filterplattenpaket zugewandten Seite mit Dehnungsmeßstreifen(23, 24) versehen ist.

7. Vorrichtung nach den Ansprüchen 4 oder 5, dadurch gekennzeichnet, daß der Meßkörper (20, 21) an seinen Fußenden (24, 25) mit Anschraubflanschen (27 bis 30) versehen ist.

## Claims

1. Process for the control of pressure between filter plates resulting from closing pressure and interior filter pressure in a plate filter press with a hydraulic closing cylinder device (8), characterized in that the compression, ruling in the area of closure of at least one of the filter plates (4) or of a frame (38) or of a separate resilient plate (19) exposed to the compression of the filter plate assembly is used as a controlling variable and is transmitted via wire strain gauges (13,14,22,23) and in that the hydraulic pressure of the closing cylinder device (8) is controlled for adherence to a nominal compression value.

2. Apparatus for carrying out the process as claimed in Claim 1, characterized in that the wire strain gauges (13,14) in the area of the exterior narrow sides (12) are arranged on at least one of the filter plates (4) or a frame (38) or on the resilient plate (19) and in that their electrical output signals are directly conducted via a transducer (16) to a regulator (10), whose adjustment signals control the hydraulic pressure of the closing cylinder device (8).

3. Apparatus as claimed in claim 2, characterized in that the wire strain gauges (13,14) are directly glued to the filter plate (4) or to the frame (38) or to the resilient plate (19).

4. Apparatus as claimed in Claim 2, characterized in that one or more measuring pieces (20,21) are arranged on the narrow sides (12) of the filter plate (4) or the frame (38) or the resilient plate (19), deforming on pressure from the filter plate or from the frame or from the resilient plate, and in that the wire strain gauges (22,23) are applied to the deformation zones (35,36) of the measuring pieces.

5. Apparatus as claimed in Claim 4, characterized in that the measuring piece (20,21) consists of a roughly U-shaped or arc-shaped piece, made of steel, for example, whose back (24) is aligned perpendicular to the main planes of the filter plates and whose two feet (25,26) are fixed rigidly to the narrow sides (12) of the filter plate (4) or of the frame (38) or of the resilient plate (19).

6. Apparatus as claimed in Claim 5, characterized in that the back (24) of the measuring piece (20, 21) is equipped both on the side facing away from the filter plate assembly and on the side facing towards the filter plate assembly with wire strain gauges (22,23).

7. Apparatus as claimed in Claims 4 or 5, characterized in that the feet (24,25) of the measuring piece (20,21) are equipped with flanges for screwing (27 to 30).

## Revendications

1. Procédé de régulation de la pression d'appui de plaques de filtre, résultant de la pression de fermeture et de la pression intérieure au filtre, dans un filtrepresse présentant un dispositif à vérin de fermeture hydraulique (8), caractérisé en ce qu'on utilise comme grandeur de réglage la compression, qui règne dans la zone d'appui, d'au moins une plaque de filtre (4) ou d'un cadre (38) ou d'une plaque de déformation (19) séparée, exposée à la compression du paquet de plaques de filtre et qu'on détermine cette compression au moyen de jauges extensométriques (13,14,22,23) et que la pression hydraulique du dispositif à vérin de fermeture (8) est commandée de façon à atteindre une valeur de consigne de compression.

2. Dispositif pour mettre en oeuvre le procédé selon la revendication 1, caractérisé en ce que les jauges extensométriques (13,14) sont disposées dans la zone des petits côtés extérieurs (12) d'au moins l'une des plaques de filtre (4) ou d'un cadre (38) ou de la plaque de déformation (19) et que leurs signaux de sortie électriques sont amenés, soit directement soit par l'intermédiaire d'un convertisseur de valeur mesurée (16) à un régulateur (10), indépendamment des signaux de réglage duquel la pression hydraulique du dispositif à vérin de fermeture (8) est commandée.

3. Dispositif selon la revendication 2, caractérisé en ce que les jauges extensométriques (13,14) sont collées directement sur la plaque de filtre (4), le cadre (38) ou la plaque de déformation (19).

4. Dispositif selon la revendication 2, caractérisé en ce que, sur les côtés étroits (12) de la plaque de filtre (4) ou du cadre (38), ou de la plaque de déformation (19), sont disposés un ou plusieurs corps de mesure (20,21), qui se déforment lors d'une compression de la plaque de filtre, respectivement du cadre ou de la plaque de déformation et que les jauges extensométriques (22,23) sont placées sur les zones de déformation (35,36) du corps de mesure.

5. Dispositif selon la revendication 4, caractérisé en ce que le corps de mesure (20,21) se compose d'un corps à peu près en forme de U ou d'arc, par exemple en acier, dont la partie arrière (24) est orientée perpendiculairement aux plans principaux des plaques de filtre et dont les deux extrémités de pied (25,26) sont fixés rigidement aux côtés étroits (12) de la plaque de filtre (4) du cadre (38) ou de la plaque de déformation (19).

6. Dispositif selon la revendication 5, caractérisé en ce que la partie arrière (24) du corps de mesure (20,21) est pourvue de jauges extensométriques (22,23), tant sur la face opposée au paquet de plaques de filtre qu'également sur la face tournée vers le paquet de plaques de filtre.

7. Dispositif selon les revendications 4 ou 5, caractérisé en ce que le corps de mesure (20,21) est pourvu, sur des extrémités de pied (24,25), de brides de raccordement par vissage (27 à 30).

Fig.1

*Fig.2*

Fig.3

Fig.4

Fig.5

Fig.6